(19) Europäisches Patentamt
European Patent Office
Office européen des brevets

(11) Veröffentlichungsnummer: **0 435 116 A2**

# (12) EUROPÄISCHE PATENTANMELDUNG

(21) Anmeldenummer: **90124272.7**

(51) Int. Cl.[5]: **C08F 6/06**

(22) Anmeldetag: **14.12.90**

(30) Priorität: **23.12.89 DE 3942756**

(43) Veröffentlichungstag der Anmeldung:
**03.07.91 Patentblatt 91/27**

(84) Benannte Vertragsstaaten:
**AT BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Bender, Dietmar, Dr.**
**Sebastian-Kneipp-Strasse 19**
**W-6707 Schifferstadt(DE)**
Erfinder: **Bronstert, Klaus, Dr.**
**Gartenstrasse 26**
**W-6719 Carlsberg(DE)**

## (54) Verfahren zur Reinigung von Polymerisaten des Isobutens.

(57) Verfahren zur Reinigung von Polymerisaten des Isobutens, welche durch kationische Polymerisation unter Verwendung von Bortrichlorid als Coinitiator hergestellt wurden, durch destillative Entfernung des Bortrichlorids und weiterer flüchtiger Bestandteile, indem man nach Beendigung der Polymerisation bei Temperaturen von -80 bis -10 °C zunächst Lösungsmittel und nicht umgesetzte Monomere bei Drücken von 100 bis 1000 mbar und anschließend Bortrichlorid bei Drücken von 0,01 bis 100 mbar jeweils destillativ entfernt.

EP 0 435 116 A2

## VERFAHREN ZUR REINIGUNG VON POLYMERISATEN DES ISOBUTENS

Die vorliegende Erfindung betrifft ein Verfahren zur Reinigung von Polymerisaten des Isobutens, welche durch kationische Polymerisation unter Verwendung von Bortrichlorid als Coinitiator hergestellt wurden, durch destillative Entfernung des Bortrichlorids und weiterer flüchtiger Bestandteile.

Die Polymerisation von kationisch polymerisierbaren, olefinisch ungesättigten Monomeren ist u.a. aus der EP-A 206 756, der EP-A 265 053, der US-A 43 16 973 und der US-A 43 42 849 bekannt. Dabei wird die Polymerisation durch eine binäre Mischung aus einem Arylalkyldihalogenid als Initiator und einer halogenhaltigen Lewissäure als Coinitiator ausgelöst, wobei als Coinitiator bevorzugt Bortrichlorid verwendet wird. In der älteren Anmeldung DE P 38 33 818 wird ferner die Verwendung von cyclischen Ethern als Initiatoren bei der Polymerisation von kationisch polymerisierbaren, olefinisch ungesättigten Monomeren beschrieben. Die hierbei erhältlichen Telechele, d.h. Makromoleküle mit reaktiven Halogenendgruppen eignen sich u.a. für die Herstellung von maßgeschneiderten Blockcopolymeren mit einstellbaren Blocklängen.

Nachteilig an diesem Polymerisationsverfahren sind u.a. die hohen Kosten für den dabei eingesetzten Coinitiator, insbesondere für das bevorzugt verwendete Bortrichlorid, da der Coinitiator bei der üblichen Aufarbeitung, beispielsweise durch Umsetzen mit Methanol, vernichtet wird.

Aus der EP-A 224 179 ist bekannt, die bei der kationischen Polymerisation von Isobuten mit Hilfe von organischen Dihalogeniden und Bortrichlorid nicht umgesetzten Stoffe - im wesentlichen neben Isobuten und Lösungsmittel noch Bortrichlorid - destillativ in einem Schritt zu entfernen und die Gase anschließend getrennt zu kondensieren. Die Kondensate werden danach zunächst in einer Destillationskolonne fraktioniert und später wieder in das Polymerisationssystem zurückgeführt. Dabei ist es erforderlich, die zurückgeführten Stoffe vor der Wiederverwendung für die Polymerisation durch spezielle Reinigungsschritte von anhaftenden Verunreinigungen, beispielsweise von gasförmigem Chlorwasserstoff zu befreien, was zu einem erheblichen Mehraufwand führt. Der chlorwasserstoff entsteht durch Eliminierungsreaktionen an den Kettenenden des Polymerisats, wobei sich dort olefinische Endgruppen bilden.

Der Erfindung lag die Aufgabe zugrunde, diesen Mängeln abzuhelfen.

Demgemäß wurde ein Verfahren zur Reinigung von Polymerisaten des Isobutens entwickelt, welche durch kationische Polymerisation unter Verwendung von Bortrichlorid als Coinitiator hergestellt wurden, wobei das Bortrichlorid und weitere flüchtige Bestandteile destillativ entfernt werden, das dadurch gekennzeichnet ist, daß man nach Beendigung der Polymerisation bei Temperaturen von -80 bis -10 °C zunächst Lösungsmittel und nicht umgesetzte Monomere bei Drücken von 100 bis 1000 mbar, und anschließend Bortrichlorid bei Drücken von 0,01 bis 100 mbar jeweils destillativ entfernt.

Die Polymerisation wird in der Regel in einem inerten Lösungsmittel durchgeführt, das durch das erfindungsgemäße Verfahren ebenso wie Bortrichlorid und nicht umgesetztes Isobuten entfernt werden kann. Als Lösungsmittel kommen insbesondere niedrig siedende Flüssigkeiten, beispielsweise Alkane sowie chlorierte Alkylverbindungen oder Mischungen davon in Betracht. Beispiele dafür sind u.a. Ethan, Propan, Butan sowie Methylchlorid.

Um eine quantitative Entfernung des Bortrichlorids zu erreichen, kann sich außerdem die Mitverwendung eines inerten Schleppmittels empfehlen. Dafür eignen sich insbesondere mehrfach chlorierte Kohlenwasserstoffe wie beispielsweise Dichlormethan oder Dichlorethan oder höhersiedende Kohlenwasserstoffe wie Pentan oder Hexan. Üblicherweise gibt man das Schleppmittel ebenso wie das Lösungsmittel vor der Polymerisation in den Polymerisationsreaktor und destilliert dieses bei der Aufarbeitung zusammen mit dem Bortrichlorid ab. In der Regel werden der Reaktionslösung 1 bis 50 Vol.-%, vorzugsweise 2 bis 20 Vol.-% Schleppmittel, bezogen auf die Menge an Lösungsmittel, hinzugefügt.

Zur Initiierung der Polymerisation wird neben Bortrichlorid ein bei der kationischen Polymerisation üblicher Initiator eingesetzt. Geeignete Initiatoren sind insbesondere 3- bis 8-gliedrige cyclische Ether. Diese können gesättigt oder ungesättigt sein, weitere Sauerstoffatome als Etherfunktion im Ring enthalten und an den C-Atomen inerte Substituenten wie Alkyl-, Cycloalkyl-, Arylalkyl-, Alkoxy-, Aryl- oder annellierte Reste aufweisen.

Bevorzugt werden als Initiatoren 5-gliedrige cyclische Ether, das heißt Furanverbindungen, eingesetzt. Sehr gut geeignet sind dabei 2,5-Dihydrofuran-und Tetrahydrofuranderivate, insbesondere solche, welche in 2- und/oder 5-Stellung Methyl-, Ethyl- oder Cyclohexylgruppen als Substituenten tragen.

Beispiele für besonders geeignete Ether sind u.a. 2,2-Dimethyldihydrofuran, 2,5-Dimethyldihydrofuran, 2, 2, 5, 5-Tetramethylhydrofuran, 2,2-Ethylmethyldihydrofuran, 2,5-Diethyldihydrofuran, 2, 2, 5, 5-Tetraethyldihydrofuran, 2,3-Dihydrobenzofuran, Dispiro[cyclohexan-1' ,2,1", 5-dihydrofuran], 2,2-Dimethyltetrahydrofuran, 2,2-Diethyl-5,5-dimethyltetrahydrofuran, 2,2,5,5-Tetraethyltetrahydrofuran.

Diese cyclischen Ether sind bekannt oder auf bekannte Weise erhältlich.

Anstelle von cyclischen Ethern können als Initiatoren auch noch Verbindungen der Formel I

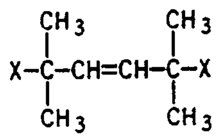

(I)

verwendet werden, in der die Reste X für Chlor, Brom, Acetylgruppen oder $C_1$-$C_8$-Alkoxygruppen stehen. Bevorzugt sind dabei solche Verbindungen, bei denen X Chlor oder $C_1$-$C_4$-Alkoxygruppen bedeuten, beispielsweise 2,5-Di-chlor-2, 5-dimethylhex-3-en, 2, 5-Dimethoxy-2, 5-dimethylhex-3-en und 2, 5-Diethoxy-2, 5-dimethylhex-3-en.

Zur Durchführung der kationischen Polymerisation verwendet man den Initiator üblicherweise in einem inerten Lösungsmittel in Konzentrationen von $10^{-6}$ bis $10^{-1}$ mol pro Mol des eingesetzten Isobutens. Das als Coinitiator dienende Bortrichlorid wird im 1- bis 200-fachen molaren Überschuß, bezogen auf den Initiator, hinzugefügt. Die Polymerisation wird in der Regel bei Temperaturen von -130° C bis +30° C durchgeführt, vorzugsweise bei Temperaturen unterhalb von 0° C. Die Polymerisation kann dabei nach den für die kationische Polymerisation üblichen Techniken sowohl kontinuierlich als auch diskontinuierlich vorgenommen werden. Man erhält bei dieser Polymerisation Makromoleküle mit reaktiven Chlorendgruppen, wobei die verwendeten Initiatoren weitgehend quantitativ in die entstehenden Makromoleküle eingebaut werden. Die Polymerisation kann durch Zugabe von dafür geeigneten Stoffen abgebrochen werden. Für diesen Zweck eigenen sich insbesondere Methanol, Ethanol oder Wasser.

Erfindungsgemäß wird nach Beendigung der Polymerisation der Inhalt des Polymerisationsreaktors bei Temperaturen von -80 bis -10° C, bevorzugt bei -60 bis -15° C unter intensivem Rühren einer stufenweisen Destillation unterworfen. Zunächst werden bei diesem Verfahren bei Drücken von 100 bis 1000 mbar, insbesondere von 200 bis 1000 mbar das Lösungsmittel und die nicht umgesetzten Monomeren abdestilliert. Anschließend wird der Druck im Polymerisationsreaktor auf 0,01 bis 100 mbar, insbesondere auf 0,1 bis 50 mbar erniedrigt und auf diese Weise das Bortrichlorid, gegebenenfalls zusammen mit einem Schleppmittel, praktisch quantitativ entfernt. Die dabei abdestillierten Stoffe können entweder gasförmig oder als Kondensate wieder in den Polymerisationsreaktor zurückgeführt werden, wo sie wieder als Coinitiator, als Lösungsmittel oder als Schleppmittel verwendet werden können. Dabei ist es in der Regel nicht notwendig, die abdestillierten Stoffe vor der Rückführung zu reinigen. Die Abfolge von Polymerisation mit nachfolgender Rückgewinnung kann dabei mehrmals wiederholt werden. Das erfindungsgemäße Verfahren kann sowohl kontinuierlich als auch diskontinuierlich durchgeführt werden.

Nach dem erfindungsgemäßen Verfahren ist es auch möglich, zunächst den Inhalt des Polymerisationsreaktors in einen zweiten Reaktor überzuführen und erst dort die nicht umgesetzten Stoffe einer stufenweisen Destillation unter den angegebenen Bedingungen zu unterwerfen. Auch in diesem Fall können die abdestillierten Stoffe wieder in den Polymerisationsreaktor zurückgeführt werden.

Aufgrund der stufenweisen Destillation der nicht umgesetzten Stoffe ermöglicht dieses Verfahren eine praktisch quantitative Rückgewinnung insbesondere des Bortrichlorids, ohne daß dieses vor der Wiederverwendung einem aufwendigen Reinigungsschritt unterworfen werden muß. Dies ist vor allem deshalb möglich, weil unter den speziellen Bedingungen des erfindungsgemäßen Verfahrens die Abspaltung der reaktiven Chlorendgruppen im Polymerisat deutlich reduziert wird. Damit läßt sich die kationische Polymerisation mit Bortrichlorid als Coinitiator auf einfache Weise durch Rückgewinnung der nicht umgesetzten Stoffe als Kreislaufprozeß durchführen.

Beispiele

Die Polymerisationen wurden unter Stickstoffatmosphäre in einem Rührreaktor in der Weise durchgeführt, daß man bei -30° C den Initiator und das Bortrichlorid 15 Sekunden lang in Methylchlorid mischte und anschließend Isobuten hinzufügte. Nach einer Reaktionszeit zwischen 0,1 und 20 Stunden wurde zur Erniedrigung der Viskosität der Polymerlösung Methylcyclohexan hinzugefügt und die Lösung anschließend stufenweise destilliert. Danach wurde das Polymerisat mit Wasser versetzt, und aus dem Borgehalt der wässrigen Extrakte wurde die Menge Bortrichlorid ermittelt, die nicht durch Abdestillation zurückgewonnen werden konnte. Das erhaltene Polymerisat wurde anschließend bei 60° C im Vakuum getrocknet und auf die vorhandenen Endgruppen hin untersucht.

Die Charakterisierung der Endgruppen erfolgte dabei mittels $^1$H-NMR-Spektroskopie. Aus dem prozentualen Anteil an olefinischen Endgruppen, verglichen mit der Anzahl der sonst vorliegenden Chlorendgruppen, konnte auf den Anteil der Eliminationen von Chlorwasserstoff, bezogen auf die Gesamtzahl der Chlorendgruppen, geschlossen werden. Enthielt das vorliegende Polymerisat praktisch keine olefinischen Endgruppen, bedeutete dies, daß keine Eliminierung von Chlorwasserstoff stattgefunden hatte und daß das zurückgewonnene Bortrichlorid deswegen nicht verunreinigt war.

Beispiel 1

In einem 4 l-Rührreaktor wurden 2,5 l Methylchlorid, 200 ml Bortrichlorid, 100 ml Dichlormethan als Schleppmittel und 11,6 g trans-2,5-Dichlor-2,5-dimethylhex-3-en miteinander vermischt, und anschließend wurde innerhalb von 15 Minuten 350 ml Isobuten zugetropft. Man rührte die Reaktionslösung 18 Stunden lang bei -30 °C, versetzte sie mit 600 ml Methylcyclohexan und überführte die Lösung danach in einen zweiten, auf -30 °C temperierten Rührreaktor. Unter intensivem Rühren wurden zunächst bei 100 bis 700 mbar Methylchlorid und danach bei 0,5 bis 100 mbar Bortrichlorid und Dichlormethan abdestilliert.

Die dabei erhältlichen Destillatfraktionen wurden in den Polymerisationsreaktor zurückgeführt, mit einer Lösung von 11,6 g trans-2,5-Dichlor-2,5-dimethylhex-3-en in 50 ml Dichlormethan, versetzt, 15 Sekunden gerührt, innerhalb von 15 Minuten mit 350 ml Isobuten versetzt, wonach erneut 18 Stunden lang bei -30 °C polymerisiert wurde. Anschließend überführte man den Reaktorinhalt in den zweiten Reaktor, versetzte das Polymerisat mit 100 ml Wasser und entfernte die hydrolysierten Borrückstände durch Extraktion. Aus dem Borgehalt der wässrigen Lösung ergab sich, daß lediglich 1% des Bortrichlorids nicht wieder zurückgewonnen werden konnte. Aus den $^1$H-NMR-Spektren der erhaltenen Polymerisate konnten keine olefinischen Endgruppen ermittelt werden.

Beispiel 2

Entsprechend dem Beispiel 1 wurden in einem 1 l-Rührreaktor bei -30 °C 450 ml Methylchlorid, 50 ml Dichlormethan, 11 ml Bortrichlorid und 2,53 g 2, 2, 5, 5-Tetramethyldihydrofuran 15 Sekunden lang vermischt und anschließend innerhalb von 60 Sekunden mit 86 ml Isobuten versetzt. Die Lösung wurde 30 Minuten lang gerührt, wonach die Reaktortemperatur auf -25 °C gesenkt wurde und zunächst bei 200 bis 700 mbar Methylchlorid und anschließend bei 1 bis 100 mbar Bortrichlorid und Dichlormethan abdestilliert wurden. Dabei konnten lediglich 1,5% des eingesetzten Bortrichlorids nicht wieder zurückgewonnen werden.

Aus den $^1$H-NMR-Spektren der erhaltenen Polymerisate konnten keine olefinischen Endgruppen ermittelt werden

Wurde die Destillation von Bortrichlorid und der übrigen flüchtigen Bestandteile bei +10 °C durchgeführt, so lagen 40% der Endgruppen des Polymerisats als olefinische Endgruppen vor.

## Ansprüche

1. Verfahren zur Reinigung von Polymerisaten des Isobutens, welche durch kationische Polymerisation unter Verwendung von Bortrichlorid als Coinitiator hergestellt wurden, durch destillative Entfernung des Bortrichlorids und weiterer flüchtiger Bestandteile, dadurch gekennzeichnet, daß man nach Beendigung der Polymerisation bei Temperaturen von -80 bis -10 °C zunächst Lösungsmittel und nicht umgesetzte Monomere bei Drücken von 100 bis 1000 mbar, und anschließend Bortrichlorid bei Drücken von 0,01 bis 100 mbar jeweils destillativ entfernt.

2. Verfahren nach Anspruch 1, dadurch gekennzeichnet, daß man die Destillation bei Temperaturen von -60 bis -15 °C durchführt.

3. Verfahren nach den Ansprüchen 1 oder 2, dadurch gekennzeichnet, daß man die destillative Entfernung vom Lösungsmittel und von nicht umgesetzten Monomeren bei Drücken von 200 bis 1000 mbar und die des Bortrichlorids bei Drücken von 0,1 bis 50 mbar durchführt.

4. Verfahren nach den Ansprüchen 1 bis 3, dadurch gekennzeichnet, daß man als Initiator einen 3- bis 8-gliedrigen cyclischen Ether verwendet.

5. Verfahren nach Anspruch 4, dadurch gekennzeichnet, daß man als Initiator einen 5-gliedrigen cyclischen Ether verwendet.

6. Verfahren nach den Ansprüchen 1 bis 3, dadurch gekennzeichnet, daß man als Initiator eine Verbindung der Formel I

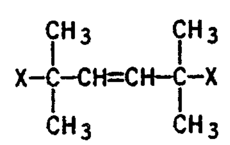

(I)

verwendet, in der die Reste X für Chlor, Brom, Acetylgruppen oder $C_1$-$C_8$-Alkoxygruppen stehen.